# EUROPÄISCHE PATENTSCHRIFT

(11) **EP 2 961 039 B1**
(45) Veröffentlichungstag und Bekanntmachung des Hinweises auf die Patenterteilung: **02.10.2019**
(21) Anmeldenummer: 14173482.2
(22) Anmeldetag: 23.06.2014
(51) Int. Cl.: H02K 1/24, H02K 15/02

(54) **Mechanisch stabilisierter Rotor für einen Reluktanzmotor**
Mechanically stabilised rotor for a reluctance motor
Rotor stabilisé mécaniquement pour un moteur à réluctance

(43) Veröffentlichungstag der Anmeldung: 30.12.2015
(73) Patentinhaber: Siemens Aktiengesellschaft, 80333 München (DE)
(72) Erfinder: Büttner, Klaus, 97618 Hollstadt (DE); Warmuth, Matthias, 97618 Windshausen (DE); Wöhner, Norbert, 97618 Heustreu (DE)

(56) Entgegenhaltungen:
- DE-A1-102013 201 353
- DE-C- 690 541
- GB-A- 1 347 561
- JP-A- H10 112 965
- JP-A- H10 257 700
- JP-A- 2002 034 218

## Beschreibung

Die Erfindung betrifft einen Rotor für einen Reluktanzmotor, einen Reluktanzmotor mit einem solchen Rotor, ein Kraftfahrzeug sowie ein Verfahren zum Herstellen des genannten Rotors. Der Rotor kann ein Blechpaket mit mehreren elektrisch voneinander isolierten Rotorblechschichten aufweisen. Jede Rotorblechschicht kann streifenförmige Flussleitabschnitte zum Leiten eines magnetischen Flusses zwischen d-Achsen des Rotors aufweisen. Die Flussleitabschnitte erstrecken sich in ihrer Längserstreckung quer zu jeweiligen q-Achsen des Rotors und sind untereinander durch nicht-ferromagnetische Flusssperrbereiche getrennt.

Ein solcher Rotor für einen Reluktanzmotor ist aus der US 5,818,140 A bekannt. Darin ist ein Rotor beschrieben, dessen Blechpaket aus Rotorblechen besteht, die Ausstanzungen aufweisen. Dieser Rotor ist hier auch als Vagati-Rotor bezeichnet. Zwischen den einzelnen Flussleitabschnitten befindet sich in den durch Ausstanzungen erzeugten Flusssperrbereichen Luft, die als magnetische Flusssperre wirkt. Die Ausstanzungen führen aber zu einer Schwächung der mechanischen Stabilität des Blechpakets, so dass der beschriebene Rotor nicht für große Drehzahlen, insbesondere nicht für Drehzahlen größer als 3.000 Umdrehungen/Minute, geeignet ist. Aus diesem Grund sind Rotoren der beschriebenen Art nicht für die Drehzahlanforderung in Kraftfahrzeugen mit elektrischen Antrieben geeignet.

Aus der JP 2002 095227 A ist ein Vagati-Rotor bekannt, bei dem die Flusssperrbereiche mit Kunstharz ausgegossen sind. Die radial angrenzenden Flussleitabschnitte weisen hierbei trapezförmige Aussparungen auf, in die das Kunstharz beim Vergießen ebenfalls fließt. Hierdurch sind die Flussleitabschnitte dann über eine Schwalbenschwanzverbindung mit dem ausgehärteten Kunstharz verbunden. Bei hohen Drehzahlen wird so eine durch Fliehkräfte bewirkte Zugkraft vom Außenumfang des Rotors über das Kunstharz nach innen zur Welle hin abgeleitet. Nachteilig hierbei ist, dass Kunstharze bei Zugbelastung reißen können. Außerdem beeinträchtigen die trapezförmigen Aussparungen in den Flussleitabschnitten die Effizienz des Motors, da der magnetische Fluss behindert wird.

In der JP 2002 034218 A ist ein Reluktanzmotor beschrieben, bei dem aneinander angrenzende Rotorbleche des Rotors zueinander versetzte Aussparungen als Flusssperren aufweisen. Die Flusssperren können mit einem nicht-magnetischen Material gefüllt sein, beispielsweise Kunstharz oder Aluminium.

Aus der JP H10 112965 A ist ein Reluktanzmotor bekannt, bei welchem die Flusssperren keine durchgehenden Ausstanzungen sind, sondern Kerben, die in das Rotorblech eingedrückt sind. Die Kerben können mit einem nicht-magnetischen Material ausgefüllt sein, zum Beispiel Kunstharz, Hartgummi oder Aluminium. Die Flusssperren von aneinander angrenzenden Rotorblechen können radial zueinander versetzt angeordnet sein.

Aus der DE 10 2013 201 353 A1 sind als Füllmaterialien für Flusssperren diamagnetische oder paramagnetische Trägermaterialien, beispielsweise Polymere, Duromere, Keramik, Glas und Holz, bekannt.

Der Erfindung liegt die Aufgabe zugrunde, einen effizienten und mechanisch stabilen Reluktanzmotor bereitzustellen.

Die Aufgabe wird die Gegenstände der unabhängigen Patentansprüche gelöst. Vorteilhafte Weiterbildungen der Erfindung sind durch die Unteransprüche gegeben.

Erfindungsgemäß ist ein Rotor für einen Reluktanzmotor vorgesehen. In bekannter Weise weist der erfindungsgemäße Rotor ein Blechpaket auf, also einen Stapel aus mehreren weichmagnetischen, bevorzugt elektrisch voneinander isolierten Rotorblechschichten, die sich jeweils radial von einer Rotationsachse des Rotors weg erstrecken. Jede Rotorblechschicht weist zumindest ein magnetisch leitfähiges Rotorblech auf, durch welches Flussleitabschnitte gebildet sind, zwischen denen sich Flusssperren befinden. Mit anderen Worten kann eine Rotorblechschicht ein einzelnes Rotorblech mit Ausstanzungen für die Flusssperren oder mehrere jeweils voneinander durch eine Flusssperre getrennte Rotorbleche aufweisen, also z.B. Blechstreifen. Die Flussleitabschnitte sind insbesondere in der bekannten Art streifenförmig ausgestaltet und/oder verbinden zwei in Umfangsrichtung benachbarte d-Achsen des Rotors.

Bei dem erfindungsgemäßen Rotor sind die Flusssperren mit einer nicht-ferromagnetischen Vergussmasse ausgegossen. Unter nicht-ferromagnetisch wird hier insbesondere nichtweichmagnetisch verstanden. Insbesondere weist die Vergussmasse eine Permeabilitätszahl auf, die kleiner als 100 ist.

Um den Rotor mechanisch zu stabilisieren, sind erfindungsgemäß jeweils bei aneinander angrenzenden Rotorblechschichten deren Flusssperren versetzt zueinander angeordnet, so dass die Flusssperren einer der Rotorblechschichten in axialer Richtung zumindest teilweise durch ein jeweiliges Rotorblech der benachbarten anderen Rotorblechschicht begrenzt sind. Die Vergussmasse der Flusssperre haftet deshalb in einem Haftbereich an dem jeweiligen axial angrenzenden Rotorblech.

Bei einer Rotation des Rotors wirkt in jeder Rotorblechschicht auf die einzelnen Rotorbleche eine Fliehkraft, welche die Rotorbleche von der Rotationsachse weg radial nach außen zieht. Bei dem erfindungsgemäßen Rotor haften die einzelnen Rotorbleche über ihren Haftbereich an der Vergussmasse der benachbarten Flusssperre. Hierdurch ergibt sich der Vorteil, dass die auf das jeweilige Rotorblech wirkende Fliehkraft über die Haftverbindung auf die Vergussmasse abgeleitet werden kann. So kann ein Rotorblech einer Rotorblechschicht durch die mit ihr im Haftbereich verklebte Vergussmasse gegen die Fliehkraft gehalten werden, was den Rotor gegen Fliehkräfte stabiler und damit bei einer höheren Drehzahl betreibbar macht. Die auf die Vergussmasse wirkende Kraft ist außerdem eine Scherkraft und kann deshalb mit weitaus geringerem Bruchrisiko auf die Vergussmasse übertragen werden als eine Zugkraft, wie es bei dem aus dem Stand der Technik bekannten Rotor der Fall ist.

Ein weiterer Vorteil ergibt sich, indem jeweils bei einem Rotorblech in dessen Haftbereich zumindest eine Vertiefung ausgebildet ist. Dann ergibt in vorteilhafter Weise die an dem Rotorblech haftende Vergussmasse in radialer Richtung einen Formschluss. Mit anderen Worten greift die Vergussmasse in das Rotorblech ein. Die Vertiefung kann eine Einkerbung oder ein Profil sein. Die Vertiefung kann dabei durch ein spanendes Verfahren bereitgestellt sein, also eine Aussparung im Blechpaket darstellen. Besonders bevorzugt ist aber, wenn die Vertiefung durch Prägen ausgebildet ist, also eine Prägung darstellt. Dieses nicht-spanende Verfahren verdrängt lediglich das weichmagnetische Material des Rotorblechs. Hierdurch ergibt sich der Vorteil, dass der magnetisch leitfähige Querschnitt des Rotorblechs durch das Ausbilden der Vertiefung nicht verringert wird. Die Vertiefung weist gemäß einer Ausführungsform der Erfindung eine Tiefe auf, die zwischen 0,05 Millimeter und 0,5 Millimeter beträgt. Beispielsweise kann sie 0,1 Millimeter betragen.

Zusätzlich oder alternativ zu einer Vertiefung kann vorgesehen sein, dass jeweils das Rotorblech in seinem Haftbereich im Vergleich zu einem am Haftbereich angrenzenden Bereich aufgeraut ist. Hierdurch wird eine Haftkraft, mit welcher die Vergussmasse am Rotorblech haftet, im Vergleich zu einem glatten, unbehandelten Rotorblech vergrößert.

Die Flusssperren benachbarter Rotorblechschichten können um die Rotorachse verdreht zueinander angeordnet sein, so dass das gesamte Rotorpaket eine Schrägung aufweist, die vorzugsweise einer Nutteilung des Stators entspricht. Dies geschieht zur Reduktion der Drehmomentwelligkeit. Besonders bevorzugt ist aber ein radialer Versatz, das heißt Flusssperren der aneinander angrenzenden Rotorschichten sind radial zueinander versetzt angeordnet. Hierdurch ergibt sich der Vorteil, dass die Fliehkräfte, die auf die einzelnen Rotorbleche einer Rotorblechschicht wirken, besonders effizient zur Welle hin abgeleitet werden können. Der Haftbereich kann in radialer Erstreckungsrichtung eine Abmessung von beispielsweise 0,5 Millimeter bis 5 Millimeter aufweisen.

Bevorzugt sind die Flusssperren benachbarter Rotorblechschichten durch den Versatz nicht vollständig voneinander getrennt, sondern die Flusssperren der einander angrenzenden Rotorblechschichten sind paarweise überlappend angeordnet, sodass die Vergussmasse der überlappenden Flusssperren einen einstückigen Stützkörper darstellt. Mit anderen Worten werden die einzelnen Flusssperren der unterschiedlichen Rotorblechschichten derart beim Auffädeln der Rotorbleche in axialer Richtung hintereinander angeordnet, dass einander entsprechende Flusssperren der Rotorblechschichten insgesamt in dem Blechpaket jeweils einen Raum oder Schacht bilden. Durch Ausgießen dieses Schachtes mit der Vergussmasse entsteht als der einstückige Stützkörper jeweils ein das gesamte Blechpaket durchdringender Stab. Hierdurch wird in vorteilhafter Weise das Biegemoment des Rotors vergrößert. Des Weiteren kann über den Stab die auf die Rotorbleche wirkende Fliehkraft axial zu den axialen Enden des Blechpakets abgeleitet werden und dort beispielsweise über stabilisierende Endscheiben auf die Welle übertragen werden. Es kann auch eine nicht-ferromagnetische Zwischenscheibe im Blechpaketinneren vorgesehen sein, welche die Stäbe in radialer Richtung stützt.

Gemäß einer vorteilhaften Ausführungsform enthält die Vergussmasse ein elektrisch isolierendes Material. Hierdurch ergibt sich der Vorteil, dass Wirbelströme zwischen den Rotorblechschichten blockiert oder unterdrückt werden. Unter elektrisch isolierend wird im Zusammenhang mit der Erfindung insbesondere eine Leitfähigkeit von weniger als 10 Siemens, insbesondere weniger als 1 Siemens, verstanden. Als besonders geeignet hat sich ein Polymer, insbesondere ein Kunstharz, oder eine Keramik erwiesen. Kunstharz weist den besonderen Vorteil auf, dass es auch besonders große Adhäsionskräfte im Haftbereich auf das angrenzende Blech ausübt und mit einer verhältnismäßig großen Scherfestigkeit bereitgestellt werden kann.

Ein anderer Vorteil ergibt sich, wenn die Vergussmasse ein elektrisch leitfähiges Material enthält, insbesondere Aluminium und/oder Kupfer. Das Aluminium und das Kupfer können jeweils auch in Form einer Aluminiumlegierung beziehungsweise Kupferlegierung bereitgestellt sein. Unter elektrisch leitfähig wird im Zusammenhang mit der Erfindung ein Material mit einer Leitfähigkeit von mehr als 100 Siemens, insbesondere mehr als 1.000 Siemens, verstanden. Mittels einer Vergussmasse, die elektrisch leitfähig ist, ergibt sich der Vorteil, dass mittels der Flusssperre Käfigstäbe eines Käfigläufers in dem Blechpaket ausgebildet werden können.

In diesem Zusammenhang sieht eine besonders vorteilhafte Weiterbildung der Erfindung vor, dass das Blechpaket an axialen Enden jeweils eine Rotorblechschicht mit Flusssperren aufweist und die Flusssperren jedes axialen Endes jeweils über einen aus der Vergussmasse gebildeten Kurzschlussring elektrisch miteinander verbunden sind und insgesamt durch die Vergussmasse im Blechpaket und die Kurzschlussringe ein Anlaufkäfig des Rotors bereitgestellt ist. Mit anderen Worten sind also auch die Kurzschlussringe aus der Vergussmasse gebildet. Hierdurch ergibt sich der Vorteil, dass mit einem einzelnen Arbeitsschritt der Anlaufkäfig oder Kurzschlusskäfig in dem Blechpaket ausgebildet werden kann.

Um die zueinander versetzten Flusssperren in dem Blechpaket auszubilden, kann jeweils ein besonders zugeschnittenes weichmagnetisches Blech für jede Rotorblechschicht bereitgestellt sein. Besonders vorteilhaft ist es aber, wenn alle Rotorblechschichten den gleichen Zuschnitt aufweisen. Dann kann eine hohe Gleichteileverwendung erzielt werden. Ein Zuschnitt ist durch die jeweiligen Ränder des zumindest einen Rotorblechs und die Flusssperren definiert und stellt insgesamt eine Kontur dar, also eine Form des Zuschnitts jedes Blechs für eine einzelne Rotorblechschicht. Diese Kontur der Rotorblechschichten ist dabei gleich ausgestaltet. Um nun die gegeneinander versetzten Flusssperren zu erhalten, sind bei dem erfindungsgemäßen Rotor bei dieser Ausführungsform die Rotorblechschichten einfach zueinander verdreht angeordnet. Beispielsweise können jeweils benachbarte Rotorblechschichten zwar gleiche, aber um 90 Grad zueinander verdrehte Konturen aufweisen.

Wie bereits ausgeführt, gehört zu der Erfindung auch ein Reluktanzmotor gemäß Anspruch 8. Dieser Reluktanzmotor weist einen Stator mit Spulen zum Rotieren eines erfindungsgemäßen Rotors mit einer Drehzahl durch ein abwechselndes Bestromen der Spulen auf auf. Durch das abwechselnde Bestromen der Spulen kann ein Drehfeld in dem Stator erzeugt werden. In dem Stator ist eine Ausführungsform des erfindungsgemäßen Rotors angeordnet, welcher durch den Reluktanzeffekt von dem Drehfeld in Rotation versetzt werden kann.

Weiterhin gehört zu der Erfindung auch ein Reluktanzmotor mit einem Umrichter zum abwechselnden Bestromen der Spulen gemäß Anspruch 9.

Der Umrichter ist dazu ausgelegt, durch das abwechselnde Bestromen der Spulen ein Drehfeld in dem Stator zu erzeugen. In dem Stator ist eine Ausführungsform des erfindungsgemäßen Rotors angeordnet, welcher durch den Reluktanzeffekt von dem Drehfeld in Rotation versetzt werden kann. Bei dem erfindungsgemäßen Reluktanzmotor ist bevorzugt vorgesehen, dass der Umrichter dazu ausgelegt ist, den Rotor mit einer Drehzahl größer als 5.000 Umdrehungen pro Minute zu rotieren. Hierdurch kann der Reluktanzmotor als Antriebsmotor für ein elektrisch angetriebenes Kraftfahrzeug verwendet werden. Der erfindungsgemäße Reluktanzrotor kann aber auch beispielsweise als Lüfterantrieb oder Kompressorantrieb für Industrieanwendungen ausgestaltet sein.

Zu der Erfindung gehört entsprechend auch ein Kraftfahrzeug gemäß Anspruch 10 mit zumindest einem Reluktanzmotor, welcher eine Ausführungsform des erfindungsgemäßen Reluktanzrotors ist.

Schließlich gehört zu der Erfindung auch ein Verfahren gemäß Anspruch 11 zum Herstellen einer Ausführungsform des erfindungsgemäßen Rotors. Gemäß dem Verfahren wird für jede Rotorblechschicht jeweils ein weichmagnetisches Blech bereitgestellt, wobei jedes Blech Aussparungen oder Ausstanzungen für die Flusssperren aufweist. Die Bleche werden axial aufgefädelt, das heißt in axialer Richtung aneinander aufgereiht oder gestapelt. Axial benachbarte Aussparungen werden dabei paarweise versetzt zueinander angeordnet, sodass jede Flusssperre zumindest teilweise durch einen Haftbereich eines benachbarten Blechs axial begrenzt ist. Die Flusssperren werden mit einer nicht-ferromagnetischen Vergussmasse ausgegossen und hierdurch die Vergussmasse in den Flusssperren angeordnet und dabei auf die Haftbereiche der axial angrenzenden benachbarten Bleche aufgebracht.

Um das Ausgießen in einem einzelnen Arbeitsschritt durchführen zu können, werden die Aussparungen bevorzugt teilweise überlappend angeordnet, sodass in axialer Richtung fluchtend angeordnete Aussparungen insgesamt eine Durchgangsöffnung oder einen Schacht durch das Rotorblechpaket bilden. Dann lässt sich diese Durchgangsöffnung von einem axialen Ende des Rotorblechs aus mit der Vergussmasse auffüllen.

Um das Blech einer einzelnen Rotorblechschicht in mehrere einzelne, voneinander getrennte Rotorbleche aufzutrennen, kann vorgesehen sein, durch ein spanendes Verfahren einen außenumfänglich verlaufenden Außenring des Blechs nach dem Fertigstellen des Rotorblechpakets durch ein spanendes Verfahren zu entfernen und hierdurch einzelne Flussleitabschnitte, die aus dem Blech gebildet sind, voneinander zu trennen.

Im Folgenden ist ein Ausführungsbeispiel der Erfindung beschrieben. Hierzu zeigt:
- FIG 1: eine schematische Darstellung einer Ausführungsform des erfindungsgemäßen Reluktanzmotors,
- FIG 2: eine schematische Darstellung eines Längsschnitts eines Rotors eines Reluktanzmotors,
- FIG 3: eine schematische Darstellung einer einzelnen Rotorblechschicht des Rotors von FIG 2,
- FIG 4: eine schematische Darstellung zweier in einem Blechpaket des Rotors aneinander angrenzend angeordneter Rotorblechschichten,
- FIG 5: eine schematische Darstellung einer einzelnen Rotorblechschicht einer Ausführungsform des erfindungsgemäßen Rotors, bei welcher in Haftbereichen der Rotorblechschicht Vertiefungen bereitgestellt sind,
- FIG 6: eine schematische Darstellung eines Längsschnitts des Rotors mit Rotorblechschichten gemäß FIG 5,
- FIG 7: eine schematische Darstellung eines vergrößerten Ausschnitts des Längsschnitts von FIG 6,
- FIG 8: eine schematische Darstellung einer Ausführungsform des erfindungsgemäßen Kraftfahrzeugs.

Bei dem im Folgenden erläuterten Ausführungsbeispiel handelt es sich um eine bevorzugte Ausführungsform der Erfindung.

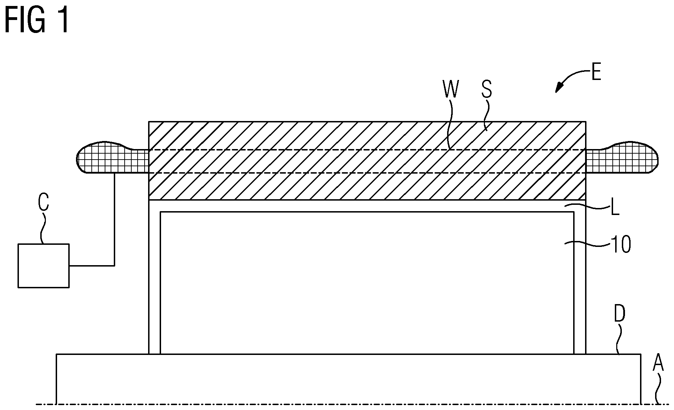

In FIG 1 ist eine elektrische Maschine E gezeigt, bei der es sich z.B. um einen Synchron-Reluktanzmotor oder einen Servomotor handeln kann. Die elektrische Maschine E kann z.B. als Antriebsmotor für einen elektrischen Fahrantrieb eines Kraftfahrzeug oder einen Lüfter- oder Kompressorantrieb ausgestaltet sein. In FIG 1 stellt eine Rotationsachse A eines Rotors 10 der elektrischen Maschine E auch eine Symmetrieachse der Darstellung dar.

Die elektrische Maschine E umfasst einen Stator S, in welchem Wicklungen W elektrischer Spulen angeordnet sind, wobei in FIG 1 nur eine der Wicklungen W dargestellt ist. Die Wicklungen W werden durch ein Drehstromquelle C abwechselnd bestromt, wodurch im Inneren des Stators S ein magnetisches Drehfeld in einem Luftspalt L der elektrischen Maschine E entsteht. Die Drehstromquelle C kann beispielsweise ein Wechselrichter sein.

Im Inneren des Stators S befindet sich der Rotor 10, der drehfest mit einer Welle D verbunden ist. Die Welle D ist um die Rotationsachse A drehbar in dem Stator S gelagert. Der Rotor 10 kann eine Ausführungsform des erfindungsgemäßen Rotors sein.

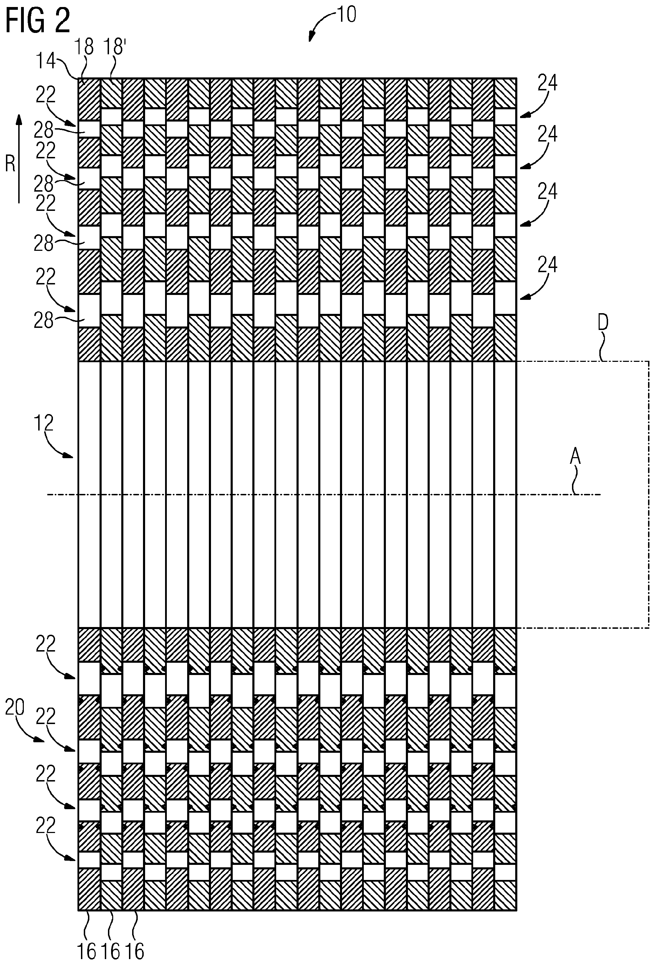

In FIG 2 ist der Rotor 10 in Alleinstellung gezeigt. Durch eine Durchgangsöffnung 12 des Rotors 10 ist die (in FIG 2 nur gestrichelt dargestellte) Welle D gesteckt. Ein Durchmesser des Rotors 10 in bezüglich der Rotationsachse A radialer Richtung R kann mehr als 20 cm betragen. Eine Länge des Rotors 10 in axialer Richtung kann mehr als 30 cm betragen.

Der Rotor 10 kann als magnetisch aktiven Teil ein Blechpaket 14 aufweisen, das mehrere Rotorblechschichten oder kurz Schichten 16 aufweisen kann, die jeweils ferromagnetisches, insbesondere weichmagnetisches, Material aufweisen. Von den magnetischen Schichten 16 sind in der FIG 2 der Übersichtlichkeit halber nur einige mit einem Bezugszeichen versehen. Zwischen den Schichten 16 befindet sich jeweils in an sich bekannter Weise eine elektrisch isolierende Schicht, z.B. ein Lack, um Wirbelströme in dem Blechpaket 14 zu blockieren. Jede Schicht 16 kann in dem in FIG 2 gezeigten Beispiel jeweils durch ein Rotorblech 18, 18' gebildet sein. In der FIG 2 sind nur das Rotorblech 18, welches sich an einer Stirnseite 20 in axialer Richtung an einem vorderen Ende des Blechpakets befindet, sowie das unmittelbar angrenzende, benachbarte Rotorblech 18' jeweils mit einem Bezugszeichen versehen.

Das Rotorblech 18 (und entsprechend auch die übrigen Rotorbleche der übrigen Schichten 16) weist Aussparungen 22 auf, in denen sich Sperren für einen magnetischen Fluss bilden, also Flusssperrbereiche oder Flusssperren. Die Aussparungen 22 können beispielsweise durch Ausstanzen der entsprechenden Formen aus Rotorblech 18 gebildet sein.

Bei dem Blechpaket 14 sind jeweilige korrespondierende Aussparungen 22 benachbarter Rotorbleche, also auch der Rotorbleche 18 und 18', versetzt zueinander angeordnet. Der Versatz ist nur teilweise, so dass durch die axial hintereinander angeordneten Aussparungen jeweils Durchgangsöffnungen 24 durch das Blechpaket 14 gebildet ist. Die Durchgangsöffnungen 24 können bei dem Blechpaket 14 mit einer Vergussmasse ausgegossen sein, beispielsweise einem elektrisch isolierenden Material, wie zum Beispiel einem Kunstharz oder einer Keramik, oder einem elektrisch leitfähigen, aber nicht-ferromagnetischen Material, wie beispielsweise Aluminium oder einer Aluminiumlegierung.

Der Versatz zwischen korrespondierenden Aussparungen benachbarter Rotorbleche 18, 18' ist radial, also in die radiale Richtung R senkrecht zur Rotationsachse A.

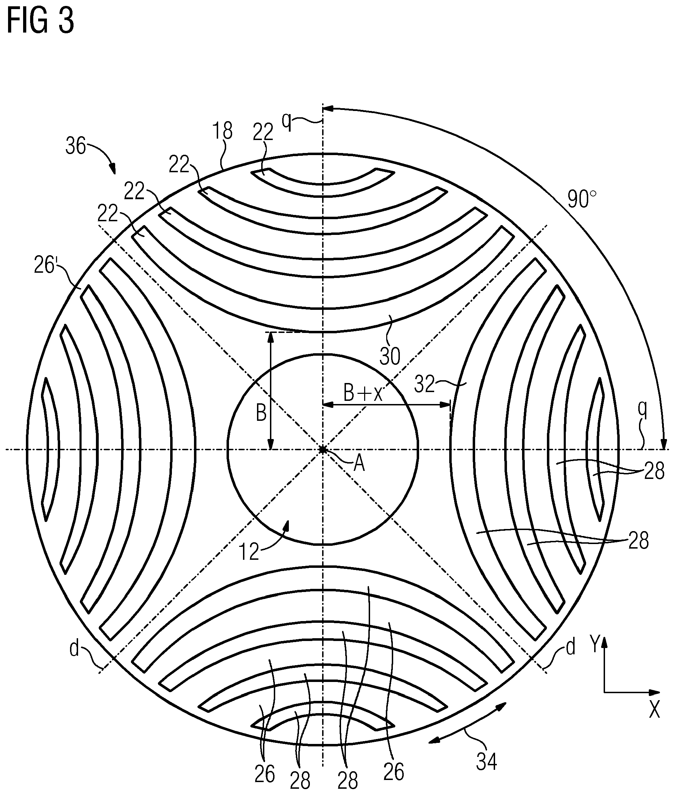

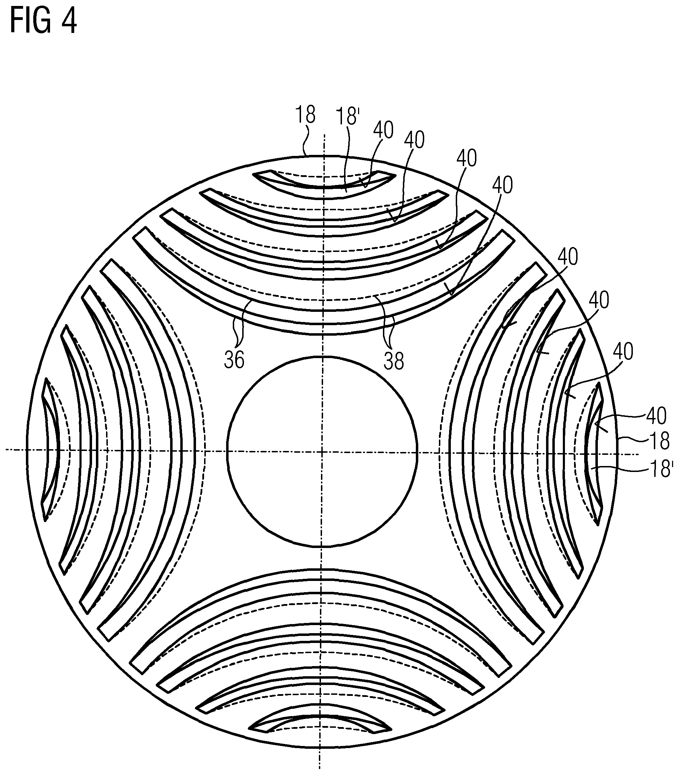

Wie anhand von FIG 3 und FIG 4 im Folgenden erläutert ist, ergibt sich durch den radialen Versatz bei jeder Aussparung eine axiale Begrenzung des durch die Aussparung 22 bereitgestellten und mit der Vergussmasse ausgefüllten Hohlraums.

In FIG 3 ist hierzu ein einzelnes Rotorblech, beispielsweise das Rotorblech 18, dargestellt. Das Rotorblech 18 weist streifenförmige magnetische Flussleitabschnitte 28 auf, die jeweils zwei d-Achsen des Rotors 10 magnetisch verbinden. Die Flussleitabschnitte 26 sind jeweils durch die Aussparungen 22 magnetisch entkoppelt. Die Flussleitabschnitte 26 sind durch Stege miteinander verbunden, die insgesamt einen umlaufenden Außenring 26' bilden. Da auch die Vergussmasse nicht-ferromagnetisch ist, bildet die in den Aussparungen 22 angeordnete Vergussmasse jeweils eine Flusssperre 28. Damit weist der Rotor 10 entlang von q-Achsen eine besonders geringe Reaktanz auf, während er entlang der Erstreckung der Flussleitabschnitte 26 eine hohe Reaktanz aufweist.

In dem gezeigten Beispiel sind die Flusssperren 28 bogenförmig ausgestaltet. Die zur Rotationsachse A nächsten Bögen 30, 32 weisen entlang des Umfangs 34 des Rotors 10, also in Umfangsrichtung, abwechselnd einen Abstand B und B+X auf. Der Abstandsunterschied X kann beispielsweise in einem Bereich von 0,5 Millimeter bis 50 Millimeter liegen. Durch den Verlauf der Flussleitabschnitte 26 und der Flusssperren 28 ergibt sich insgesamt bei dem Rotorblech 18 eine Schnittform oder Kontur 36. Durch die asymmetrische Kontur liegen zwei benachbarte Rotorbleche 18, 18' nicht deckungsgleich aufeinander, wenn man die benachbarten Rotorbleche 18, 18' z.B. um 90 Grad gegeneinander verdreht anordnet.

Dies ist in FIG 4 veranschaulicht. FIG 4 zeigt das Rotorblech 18 aus der Frontalsicht von der Vorderseite 20 her. Hinter dem Rotorblech 18 ist das Rotorblech 18' dargestellt.

Das Rotorblech 18' kann eine Kontur 38 aufweisen, die identisch zur Kontur 36 des Rotorblechs 18 ist. Das Rotorblech 18' ist aber um 90 Grad bezüglich des Rotorblechs 18 gedreht. Zur besseren Unterscheidung ist in FIG 4 zum einen die vordere Kontur 36 des Rotorblechs 18 und dieselbe, aber um 90 Grad gedrehte hintere Kontur 38 des Rotorblechs 18' dargestellt.

Die Kontur 38 ist teilweise von dem Rotorblech 18 verdeckt, was durch gestrichelte Linien veranschaulicht ist.

Durch die verdrehte Anordnung bildet das Rotorblech 18' im Bereich der Flusssperren 28 eine axiale Begrenzung der Flusssperren des Rotorblechs 18. Die in den Aussparungen 22 angeordnete Vergussmasse der Flusssperren 28 haftet an den axial begrenzenden Flächen des Rotorblechs 18', so dass diese Flächen Haftflächen 40 bilden. Durch die Haftung der Vergussmasse der Flusssperren 28 an den Haftflächen 40 des Rotorblechs 18' wird eine Fliehkraft, die bei einer Rotation des Rotors 10 um die Rotationsachse A auf das Rotorblech 18' wirkt, als eine Scherkraft auf die Vergussmasse in den Flusssperren 28 des Rotorblechs 18 übertragen.

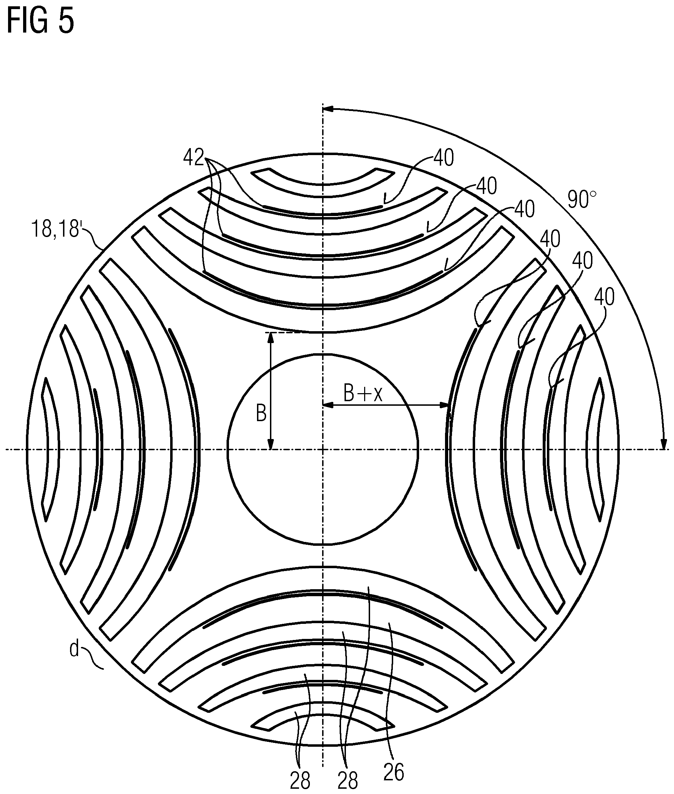

Um die Kraftübertragung zu verbessern, ist, wie in FIG 5 veranschaulicht, im Bereich der Haftflächen 40 eines Rotorblechs 18, 18' eine Vertiefung 42 vorgesehen, also beispielsweise Kerben oder Einbuchtungen oder Prägungen. Mit anderen Worten ist eine radiale Anordnung der Aussparungen entlang einer x-Achse und einer dazu senkrechten y-Achse bei den Rotorblechen des Rotors 10 verschieden.

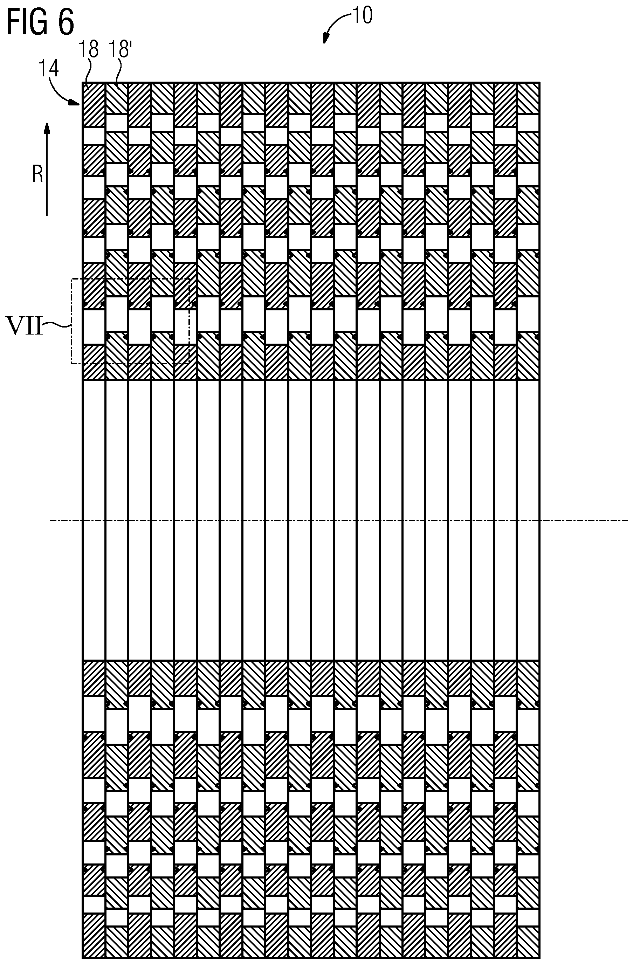

In FIG 6 ist gezeigt, wie bei dem Rotor 10 das Blechpaket 14 in Längsschnitt Rotorbleche 18, 18' aufweist, bei welchen sich durch die Vertiefungen 42 ein Formschluss in radialer Richtung R ergibt. In FIG 6 sind hierbei dieselben Bezugszeichen wie in FIG 2 für funktionsgleiche Elemente vergeben, um die Übersichtlichkeit zu wahren.

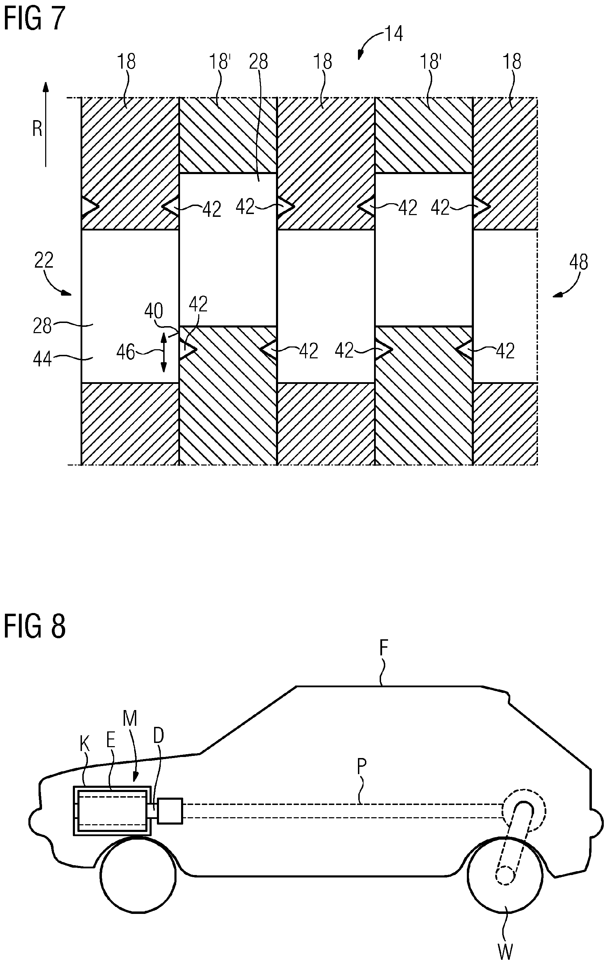

FIG 7 zeigt einen Ausschnitt Z aus der FIG 6. In FIG 7 sind die Rotorbleche 18, 18' mit ihrer durch die Vertiefungen 42 bewirkten Verzahnung gezeigt. Radial in die radiale Richtung R wirkende Fliehkräfte auf das Rotorblech 18' werden durch den Formschluss der Vertiefung 42 und durch die Verklebung mit der Vergussmasse 44 im Bereich der Haftflächen 40 als Scherkräfte 46 übertragen, das heißt die Verklebung wird auf Scherung beansprucht. Schwingungsrisse an den radialen Flächen stellen daher kein Problem dar.

Insgesamt bildet die in den Aussparungen 22 angeordnete Vergussmasse 44 der Flusssperren 28 einen sich durch das Blechpaket 14 erstreckenden Stützkörper 48, der in den Durchgangsöffnungen 24 angeordnet ist und insgesamt als eine Stange radial wirkende Fliehkräfte auf axiale Enden des Blechpakets 14, also auf die Vorderseite 20 und die gegenüberliegende Rückseite des Blechpakets 14, ableiten kann. Hier können durch beispielsweise Kurzschlussringe oder Endplatten die Fliehkräfte auf die Welle D abgeleitet oder übertragen werden.

Im Folgenden ist ein Herstellungsverfahren für den Rotor 10 beschrieben. Die für die Flusssperren 28 vorgesehenen Aussparungen 22 im Rotorblech 18, 18' werden in x- und y-Ausrichtung unterschiedlich platziert, wie es in FIG 4 veranschaulicht ist, sodass sich beim Stapeln der Rotorbleche 18, 18' axiale Flächen 40 für die Verknüpfung mit der Vergussmasse 44 ergeben (FIG 2 und FIG 4). Hierzu werden die Bleche jeweils um 90 Grad verdreht paketiert. Alternativ können zwei Bleche verwendet werden, bei denen generell alle Segmente radial auf unterschiedlichen Abständen angeordnet sind, also nicht nur die beiden Abstände B, B+X vorgesehen sind. Am gestapelten Rotorblechpaket 14 werden die Freiräume oder Aussparungen 22 mit der stabilisierenden Vergussmasse 44 vergossen, die eine für eine vorbestimmte Maximaldrehzahl ausreichende Adhäsion und Scherfestigkeit aufweist. Hierbei kann auch berücksichtigt werden, dass ein Harzgemisch verwendet werden kann, das den elektrisch isolierenden Lack der Rotorbleche 18, 18' anlöst, sodass sich eine besonders gute Haftung der Vergussmasse 44 an den Rotorblechen 18, 18' ergibt.

Zusätzlich können vor der Montage des Blechpakets 14 für die mit Vergussmasse zu beaufschlagenden Flächen 40 Formschlüsse vorgesehen werden, indem Vertiefungen 42 eingeprägt werden, wie es in FIG 5 und FIG 6 und FIG 7 veranschaulicht ist. Dadurch ergeben sich entgegen der bekannten Ausführung aus dem Stand der Technik keine radialen, sondern axiale Eingriffe in die Blechpakete. Diese Formschlüsse reduzieren jedoch nicht die Effizienz des Motors, da insbesondere bei Prägung der Vertiefungen kein Material entfernt wird, sondern nur verdrängt.

Wird als Vergussmasse 44 ein elektrisch leitender Werkstoff eingesetzt, besteht die Möglichkeit, an den Rotorenden Kurzschlussringe anzugießen, wodurch zusätzlich ein Anlaufkäfig ausgebildet wird. Dabei wird an den beiden Paketenden eine geschlossene Kontur, die die einzelnen Flächen der Flusssperren 28 verbindet, angebracht. Setzt man als Vergussmasse ein nicht leitendes Material an, so dienen diese Ringe oder Scheiben rein als Stützelement, über welches der Stützkörper 48 an der Welle D gehalten wird.

Indem die Vergussmasse 44 in die Durchgangsöffnungen 24 eingebracht wird, werden die versetzt angeordneten Flächen durch die Vergussmasse verklebt. Die Klebestellen werden auf Scherung beansprucht, wenn sich der Rotor 10 dreht. Dadurch ergibt sich eine hohe Festigkeit, anders als bei einer Zugbeanspruchung. Die zulässigen Belastungen bei Drehzahl in radialer Richtung R werden durch die axialen Formschlüsse in den Vertiefungen 42 verstärkt. Diese Formschlüsse reduzierten jedoch nicht die Effizienz des Motors, da der magnetische Fluss nicht gehindert wird.

Durch das genannte Herstellungsverfahren werden die relativ unstabilen Rotorbleche mit ihren Flusssperren bezüglich der Drehzahleignung stabilisiert. Einer Aufweitung des Rotorbleches bei Drehzahlen größer als 5.000 Umdrehungen pro Minute wirken die ausgegossenen Bereiche, also der Stützkörper 48 mit seiner Haftung, an den Haftflächen 40 und gegebenenfalls den Formschlüssen in den Vertiefungen 42 entgegen.

Durch das Beispiel ist gezeigt, wie man bei einem Reluktanzmotor die folgenden Vorteile erlangen kann. Es erhöht sich die Drehzahltauglichkeit des Rotors 10. Die Stegbreite der verbindenden Stege am Außendurchmesser entlang der Rotoraußenseite, also der Außenring 26', kann sehr klein sein. Es kann auch auf Stege zwischen den Flussleitabschnitten verzichtet werden, die im Stand der Technik bei den Rotorblechen vorgesehen sein müssen. Es ist sogar in einer Ausführungsform der Erfindung ein Verzicht auf die äußeren Stege, d. h. den Außenring 26', zwischen den Flussleitabschnitten 26 möglich, da der komplette Verbund durch den Stützkörper 48 aus Vergussmasse 44 und axialen Endscheiben in sich fixiert werden kann. Die zum Anpassen des Außendurchmessers des Rotors 10 an einen Stator nötige spanende Bearbeitung am Außendurchmesser des Rotors 10 ist durch die erhöhte Stabilität des Blechpakets 14 einfacher und kann damit kostengünstiger durchgeführt werden. Da auf eine Bandage zum Stabilisieren des Blechpakets 14, die um das Blechpaket 14 gewickelt werden muss, verzichtet werden kann, ergibt sich ein optimierter Luftspalt L bei dem Reluktanzmotor. Das Blechpaket 14 des Rotors 10 weist auch eine verbesserte Biegeeigenfrequenz am Läufer durch den Gesamtverbund auf, wodurch sich das Rotor-Blechpaket 14 auch dazu eignet, die Welle D des Reluktanzmotors zu stabilisieren. Auch ergibt sich hierdurch eine Reduktion der Torsionsschwingungen bei einem Betrieb des Reluktanzmotors. Der Rotor kann in vorteilhafter Weise bei der Montage als einzelnes, einstückiges Bauteil gehandhabt werden.

In FIG 8 ist eine Verwendungsmöglichkeit für die elektrische Maschine E gezeigt. In FIG 8 ist in schematischer Darstellung ein Kraftfahrzeug F dargestellt, das beispielsweise ein Personenkraftwagen sein kann. Das Kraftfahrzeug F weist einen elektrischen Antriebsmotor M auf, in dessen Gehäuse K sich beispielsweise die elektrische Maschine E oder eine andere Ausführungsform des erfindungsgemäßen Reluktanzmotors befinden kann. Die Welle D der elektrischen Maschine E kann z.B. mit einem Antriebsstrang P des Kraftfahrzeugs F gekoppelt sein. Der Antriebsstrang P kann beispielsweise ein Hinterrad W des Kraftwagens F antreiben.

Insgesamt zeigt das Beispiel, wie durch die Erfindung für ein Elektrofahrzeug oder eCar ein Reluktanzmotor bereitgestellt werden kann, dessen Rotor für eine erhöhte Drehzahl ausgelegt ist.

## Patentansprüche

1. Rotor (10) für einen Reluktanzmotor (E), wobei der Rotor (10) ein Blechpaket (14) mit mehreren Rotorblechschichten (16) aufweist, von denen jede mit einer nicht-ferromagnetischen Vergussmasse (44) ausgegossene Flusssperren (28) und zumindest ein weichmagnetisches, die Flusssperren (28) begrenzendes Rotorblech (18, 18') aufweist, wobei jede Rotorblechschicht ein einzelnes Rotorblech mit Ausstanzungen für die Flusssperren oder mehrere jeweils voneinander durch eine Flusssperre getrennte Rotorbleche aufweist und wobei jeweils von aneinander angrenzenden Rotorblechschichten (16) deren Flusssperren (28) versetzt zueinander angeordnet sind, so dass die Flusssperren (28) einer der Rotorblechschichten (16) in axialer Richtung zumindest teilweise durch ein jeweiliges Rotorblech (18, 18') der anderen Rotorblechschicht (16) begrenzt sind und jeweils die Vergussmasse (44) der Flusssperre (28) in einem Haftbereich (40) an dem jeweiligen Rotorblech (18, 18') haftet,
**dadurch gekennzeichnet, dass**
- jeweils das Rotorblech (18, 18') in dem Haftbereich (40) zumindest eine durch eine Prägung und/oder eine Aussparung gebildete Vertiefung (42) aufweist, wobei die zumindest eine Vertiefung (42) und die an dem Rotorblech (18, 18') haftende Vergussmasse (44) in radialer Richtung (R) einen Formschluss bilden, und/oder
- jeweils das Rotorblech (18, 18') in dem Haftbereich (40) im Vergleich zu einem angrenzenden Bereich aufgeraut ist.

2. Rotor (10) nach Anspruch 1, wobei die Flusssperren (28) der aneinander angrenzenden Rotorblechschichten (16) radial (R) zueinander versetzt angeordnet sind.

3. Rotor (10) nach einem der vorhergehenden Ansprüche, wobei die Flusssperren (28) der aneinander angrenzenden Rotorblechschichten (16) teilweise überlappend angeordnet sind und die Vergussmasse (44) der überlappenden Flusssperren (28) einen einstückigen Stützkörper (48) darstellt.

4. Rotor (10) nach einem der vorhergehenden Ansprüche, wobei die Vergussmasse (44) ein elektrisch isolierendes Material enthält, insbesondere ein Polymer oder eine Keramik.

5. Rotor (10) nach einem der vorhergehenden Ansprüche, wobei die Vergussmasse (44) ein elektrisch leitfähiges Material enthält, insbesondere Aluminium und/oder Kupfer.

6. Rotor (10) nach Anspruch 5, wobei das Blechpaket (14) an axialen Enden (20) jeweils eine Rotorblechschicht (18) mit Flusssperren (28) aufweist und die Flusssperren (28) jedes axialen Endes (20) über einen aus der Vergussmasse (44) gebildeten Kurzschlussring elektrisch miteinander verbunden sind und insgesamt durch die Vergussmasse (44) im Blechpaket (14) und die Kurschlussringe ein Anlaufkäfig des Rotors (10) bereitgestellt ist.

7. Rotor (10) nach einem der vorhergehenden Ansprüche, wobei bei jeder Rotorblechschicht (16) durch die jeweiligen Ränder des zumindest einen Rotorblechs (18, 18') und der Flusssperren (28) insgesamt eine Kontur (36, 38) definiert ist und die Konturen (36,38) der Rotorblechschichten (16) gleich, aber zueinander verdreht angeordnet sind.

8. Reluktanzmotor (E) mit einem Rotor (10) nach einem der vorhergehenden Ansprüche, wobei der Reluktanzmotor (E) einen Stator (S) mit Spulen (W) zum Rotieren des Rotors (10) mit einer Drehzahl durch ein abwechselndes Bestromen der Spulen (W) aufweist.

9. Reluktanzmotor (E) nach Anspruch 8, der einen Umrichter (C) zum abwechselnden Bestromen der Spulen (W) aufweist, wobei der Umrichter (C) dazu ausgelegt ist, durch das abwechselnde Bestromen den Rotor (10) zu rotieren.

10. Kraftfahrzeug (F) mit zumindest einem Reluktanzmotor (E) nach Anspruch 8 oder 9.

11. Verfahren zum Herstellen eines Rotors (10) nach einem der Ansprüche 1 bis 7, mit den Schritten:
- Bereitstellen jeweils eines weichmagnetischen Blechs (18, 18') für eine der Rotorblechschichten (16), wobei jedes Blech (18, 18') Aussparungen (22) für die Flusssperren (28) aufweist;
- Axial auffädeln der Bleche (18, 18') und hierbei axial benachbarte Aussparungen (22) teilweise versetzt zueinander anordnen, so dass jede Flusssperre (28) durch einen Haftbereich (40) eines benachbarten Blechs (18, 18') axial begrenzt ist,
- Ausgießen der Aussparungen (22) mit einer nicht-ferromagnetischen Vergussmasse (44) und hierdurch Anordnen der Vergussmasse (44) in den Aussparungen (22) und Aufbringen der Vergussmasse (44) auf die Haftbereiche (40),
**dadurch gekennzeichnet, dass**
a)jeweils das Rotorblech (18, 18') in dem Haftbereich (40) zumindest eine durch eine Prägung und/oder eine Aussparung gebildete Vertiefung (42) aufweist und die zumindest eine Vertiefung (42) und die an dem Rotorblech (18, 18') haftende Vergussmasse (44) in radialer Richtung (R) einen Formschluss bilden, und/oder
b)jeweils das Rotorblech (18, 18') in dem Haftbereich (40) im Vergleich zu einem angrenzenden Bereich aufgeraut wird.

## Claims

1. Rotor (10) for a reluctance motor (E), wherein the rotor (10) has a laminated core (14) with a number of rotor sheet metal blanks (16), of which each has flux barriers (28) cast with a non-ferromagnetic casting compound (44) and at least one soft-magnetic rotor sheet (18, 18') delimiting the flux barriers (28), wherein each rotor sheet metal blank has a single rotor sheet with punches for the flux barriers or a number of rotor sheets separated respectively from one another by a flux barrier and wherein in each case
the flux barriers (28) of adjacent adjoining rotor sheet metal blanks (16) are arranged offset relative to one another so that the flux barriers (28) of one of the rotor sheet metal blanks (16) are delimited in the axial direction at least partially by a respective rotor sheet (18, 18') of the other rotor sheet metal blank (16) and in each case the casting compound (44) of the flux barrier (28) in an adhesion zone (40) adheres to the respective rotor sheet (18, 18'),
**characterised in that**
- in each case the rotor sheet (18, 18') has at least one depression (42) formed by a stamping and/or a recess in the adhesion zone (40), wherein the at least one depression (42) and the casting compound (44) adhering to the rotor sheet (18, 18') form a form closure in the radial direction (R), and/or
- in each case the rotor sheet (18, 18') in the adhesion zone (40) is roughened by comparison with an adjacent zone.

2. Rotor (10) according to claim 1, wherein the flux barriers (28) of the adjacent adjoining rotor sheet metal blanks (16) are arranged radially (R) offset relative to one another.

3. Rotor (10) according to one of the preceding claims, wherein the flux barriers (28) of the adjacent adjoining rotor sheet metal blanks (16) are arranged so as to partially overlap and the casting compound (44) of the overlapping flux barriers (28) represents a single piece support structure (48) .

4. Rotor (10) according to one of the preceding claims, wherein the casting compound (44) contains an electrically insulating material, in particular a polymer or a ceramic.

5. Rotor (10) according to one of the preceding claims, wherein the casting compound (44) contains an electrically conductive material, in particular aluminum and/or copper.

6. Rotor (10) according to claim 5, wherein the laminated core (14) has a rotor sheet metal blank (18) with flux barriers (28) at axial ends (20) respectively and the flux barriers (28) of each axial end (20) are electrically connected to one another by way of a short-circuit ring formed from the casting compound (44) and a start-up cage of the rotor (10) is provided overall by the casting compound (44) in the laminated core (14) and the short-circuit rings.

7. Rotor (10) according to one of the preceding claims, wherein a contour (36, 38) is defined with each rotor sheet metal blank (16) by the respective edges of the at least one rotor sheet (18, 18') and the flux barriers (28) and the contours (36, 38) of the rotor sheet metal blanks (16) are the same but arranged twisted relative to one another.

8. Reluctance motor (E) with a rotor (10) according to one of the preceding claims, wherein the reluctance motor (E) comprises a stator (S) with coils (W) for rotating the rotor (10) at a rotary speed by the alternate supply of the coils (W) .

9. Reluctance motor (E) according to claim 8, which comprises a converter (C) for the alternate supply of the coils (W), wherein the converter (C) is configured to rotate the rotor (10) by the alternate supply,

10. Motor vehicle (F) with at least one reluctance motor (E) according to claim 8 or 9,

11. Method for manufacturing a rotor (10) according to one of claims 1 to 7, having the steps:
- providing a soft-magnetic sheet (18, 18') for one of the rotor sheet metal blanks (16) in each instance, with each sheet (18, 18') having recesses (22) for the flux barriers (28) ;
- axially threading the sheets (18, 18') and herewith arranging axially adjacent recesses (22) partially offset relative to one another so that each flux barrier (28) is axially delimited by an adhesion zone (40) of an adjacent sheet (18, 18'),
- casting the recesses (22) with a non-ferromagnetic casting compound (44) and herewith arranging the casting compound (44) in the recesses (22) and applying the casting compound (44) to the adhesion zones (40),
**characterised in that**
a)in each case the rotor sheet (18, 18') has at least one depression (42) formed by a stamping and/or a recess in the adhesion zone (40) and the at least one depression (42) and the casting compound (44) adhering to the rotor sheet (18, 18') form a form closure in the radial direction (R), and/or
b) in each case the rotor sheet (18, 18') in the adhesion zone (40) is roughened by comparison with an adjacent zone.

## Revendications

1. Rotor (10) d'un moteur (E) à réluctance, le rotor (10) ayant un paquet (14) de tôles à plusieurs feuillets (16), dont chacun a des arrêts (28) de flux, coulés en une composition (44) de scellement non ferromagnétique, et au moins une tôle (18, 18') de rotor à magnétisme doux, délimitant les arrêts (28) de flux, dans lequel chaque feuillet de tôle de rotor a une tôle de rotor individuelle ayant des poinçonnages pour les arrêts de flux ou plusieurs tôles de rotor, séparées, respectivement, les unes des autres par un arrêt de flux, et dans lequel les arrêts (28) de flux de feuillets (16) de tôle de rotor voisins les uns des autres sont disposés en étant décalés les uns par rapport aux autres, de manière à ce que les arrêts (28) de flux de l'un des feuillets (16) de tôle de rotor soit délimités dans la direction axiale, au moins en partie, par une tôle (18, 18') de rotor de l'autre feuillet (16) de tôle de rotor et de manière à ce que la composition (44) de scellement de l'arrêt (28) de flux adhère, dans une partie (40) d'adhérence, à la tôle (18, 18') de rotor respectif,
**caractérisé en ce que**
- la tôle (18, 18') de rotor a, dans la partie (40) d'adhérence, au moins une cavité (42 ) formée par un estampage et/ou un évidement, la au moins une cavité (42) et la composition (44) de scellement adhérent à la tôle (18, 18') de rotor formant, dans la direction (R) radiale, une complémentarité de forme et/ou
- la tôle (18, 18') de rotor est rugueuse dans la partie (40) d'adhérence par rapport à une partie voisine.

2. Rotor (10) suivant la revendication 1, dans lequel les arrêts (28) de flux des feuillets (16) de tôle de rotor voisins l'un de l'autre sont disposés en étant décalés radialement les uns par rapport aux autres.

3. Rotor (10) suivant l'une des revendications précédentes, dans lequel les arrêts (28) de flux des feuillets (16) de tôle de rotor voisins les uns des autres sont disposés en se chevauchant en partie et la composition (44) de scellement des arrêts (28) de flux en chevauchement représente un corps (48) d'appui d'une seule pièce.

4. Rotor (10) suivant l'une des revendications précédentes, dans lequel la composition (44) de scellement contient une matière isolante électriquement, notamment un polymère ou une céramique.

5. Rotor (10) suivant l'une des revendications précédentes, dans lequel la composition (44) de scellement contient une matière conductrice de l'électricité, notamment de l'aluminium et/ou du cuivre.

6. Rotor (10) suivant la revendication 5, dans lequel le paquet (14) de tôles a, aux extrémités (20) axiales, respectivement, un feuillet (18) de tôle de rotor ayant des arrêts (28) de flux et les arrêts (28) de flux de chaque extrémité (20) axiale sont reliés entre eux électriquement par une bague de court-circuit en la composition (44) de scellement, et, dans l'ensemble, par la composition (44) de scellement dans le paquet (14) de tôles et la bague de court-circuit, il est procuré une cage de démarrage du rotor (10).

7. Rotor (10) suivant l'une des revendications précédentes, dans lequel, pour chaque feuillet (16) de tôle de rotor, il est défini dans l'ensemble un contour (36, 38) par les bords respectifs de la au moins une tôle (18, 18') de rotor et les arrêts (28) de flux, et les contours (36, 38) des feuillets (16) de tôle de rotor sont égaux, mais tournés les uns par rapport aux autres.

8. Moteur (E) à réluctance, comprenant un rotor (10) suivant l'une des revendications précédentes, le moteur (E) à réluctance ayant un stator (S) à bobines (W) pour faire tourner le rotor (10) à une certaine vitesse de rotation par une alimentation alternée en courant des bobines (W).

9. Moteur (E) à réluctance suivant la revendication 8, qui a un onduleur (C) pour l'alimentation en courant alterné des bobines (W), l'onduleur (C) étant conçu pour faire tourner le rotor (10) par l'alimentation en courant alterné.

10. Véhicule (F) automobile comprenant au moins un moteur (E) à réluctance suivant la revendication 8 ou 9.

11. Procédé de fabrication d'un rotor (10) suivant l'une des revendications 1 à 7, comprenant les stades :
- on se procure, respectivement, une tôle (18, 18') à magnétisme doux pour l'un des feuillets (16) de tôle de rotor, chaque tôle (18, 18') ayant des évidements (22) pour les arrêts (28) de flux ;
- on enfile axialement les tôles (18, 18') et on met ainsi, de manière décalée, au moins en partie, les uns par rapport aux autres, des évidements (22) voisins axialement, de manière à délimiter axialement chaque arrêt (28) de flux par une partie (40) d'adhérence d'une tôle (18, 18') voisine,
- on coule, dans les évidements (22), une composition (44) de scellement non ferromagnétique et on met ainsi la composition (44) de scellement dans les évidements (22) et on dépose la composition (44) de scellement sur les parties (40) d'adhérence,
**caractérisé en ce que**
a) la tôle (18, 18') de rotor a, dans la partie (40) d'adhérence, au moins une cavité (42) formée par un estampage et/ou un évidement, la au moins une cavité (42) et la composition (44) de scellement adhérent à la tôle (18, 18') de rotor formant, dans la direction (R) radiale, une complémentarité de forme et/ou
b) la tôle (18, 18') de rotor est rugueuse dans la partie (40) d'adhérence par rapport à une partie voisine.
